# EUROPÄISCHE PATENTANMELDUNG

(11) **EP 3 001 166 A1**
(43) Veröffentlichungstag der Anmeldung: **30.03.2016**
(21) Anmeldenummer: 15176408.1
(22) Anmeldetag: 13.07.2015
(51) Int. Cl.: G01L 9/00

(54) **MIKROMECHANISCHE DRUCKSENSORVORRICHTUNG UND ENTSPRECHENDES HERSTELLUNGSVERFAHREN**

(30) Priorität: 09.09.2014 DE 102014217997
(71) Anmelder: ROBERT BOSCH GMBH, 70442 Stuttgart (DE)
(72) Erfinder: Fuchs, Tino, 72076 Tuebingen (DE); Rohlfing, Franziska, 71229 Leonberg (DE)

(57) **Zusammenfassung**

Die Erfindung schafft eine mikromechanische Drucksensorvorrichtung und ein entsprechendes Herstellungsverfahren. Die mikromechanische Drucksensorvorrichtung umfasst ein erstes Substrat (W1) mit einer ersten Vorderseite (V1) und einer ersten Rückseite (R1), eine in dem ersten Substrat (W1) ausgebildete Wanne (WA), wobei in der Wanne (WA) eine erste Elektrode (E3) ausgebildet ist, welche sich über die Wanne (WA) hinaus in eine Peripherie der Wanne (WA) auf der erste Vorderseite (V1) erstreckt. Weiterhin umfasst sie ein zweites Substrat (W2) mit einer zweiten Vorderseite (V2) und einer zweiten Rückseite (R2), eine in dem zweiten Substrat (W2) ausgebildete erste Durchgangsöffnung (V3), wobei die erste Durchgangsöffnung an der zweiten Vorderseite (V2) von einem membranartigen ersten Widerstandsbereich (R3) überspannt ist. Die erste Vorderseite (V1) und die zweite Vorderseite (V2) sind derart über eine Bondverbindung (B1, B2) miteinander verbunden sind, dass der erste Widerstandsbereich (R3) die erste Elektrode (E3) zum Bilden einer Kaverne (K) mit vorbestimmter Druckatmosphäre verschließt und in der Peripherie der Wanne (WA) die erste Elektrode (E3) elektrisch kontaktiert. Der erste Widerstandsbereich (R3) ist durch Anlegen von Druck (P) durch die Durchgangsöffnung (V3) in die Wanne (WA) auslenkbar, so dass er die erste Elektrode (E3) innerhalb der Wanne (WA) elektrisch kontaktiert.

## Beschreibung

Die Erfindung betrifft eine mikromechanische Drucksensorvorrichtung und ein entsprechendes Herstellungsverfahren.

### Stand der Technik

Obwohl auch beliebige mikromechanische Bauelemente anwendbar sind, werden die vorliegende Erfindung und die ihr zugrundeliegende Problematik anhand von Bauelementen auf Siliziumbasis erläutert.

Aus der DE 10 2008 041 937 A1 ist eine mikromechanische Drucksensorvorrichtung bekannt, deren Herstellung mit Verfahren der Dünnschichttechnik auf einem Substratwafer aus Silizium erfolgt. Die bekannte Drucksensorvorrichtung umfasst ein Substrat, eine Membran und eine Zwischenschicht, wobei die Membran in Abhängigkeit einer Kraftwirkung auf die Membran zumindest in Teilbereichen der Membran relativ zum Substrat beweglich vorgesehen ist. Die Membran und die Zwischenschicht sind im Bereich einer Kontaktfläche in mechanischem Kontakt miteinander trennbar, wobei in Abhängigkeit der Kraftwirkung auf die Membran eine Größenveränderung der Kontaktfläche vorgesehen ist. Die Membran und die Zwischenschicht sind mit dem Substrat verbunden.

Zur Herstellung der bekannten mikromechanischen Drucksensorvorrichtung werden in vorgegebenem Wechsel funktionale Schichten abgeschieden und durch Ätzen strukturiert, sodass definierte Strukturen entstehen. Der Aufbau erfolgt vollständig auf einem Wafer. Ein wesentlicher Punkt dabei ist das Freistellen der Membran durch das Entfernen einer Opferschicht sowie das darauffolgende Verschließen der Membran mit einer Verschlussschicht. Hierbei entsteht eine geschlossene Kavität. Der Druck, der beim Verschließen der Membran in der Kavität eingeschlossen wird, ist durch die Prozessparameter beim Abscheiden der Verschlussschicht bedingt und kann nicht beliebig eingestellt werden.

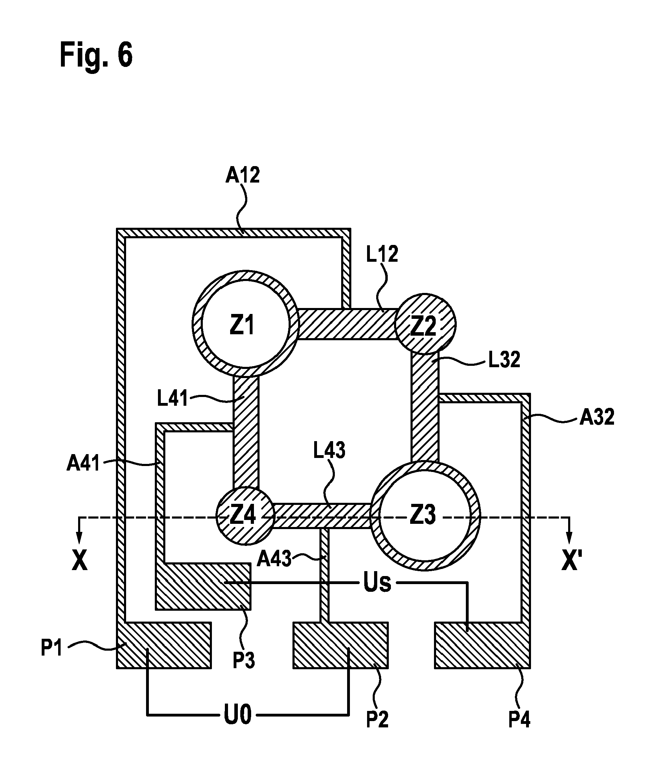

Fig. 6 ist eine schematische Schaltungsdarstellung zur Erläuterung des elektrischen Auswerteprinzips der aus der DE 10 2008 041 937 A1 bekannten mikromechanischen Drucksensorvorrichtung.

In Fig. 6 bezeichnen Bezugszeichen Z1, Z3 zwei aus der DE 10 2008 041 937 A1 bekannte Membranwiderstände, wobei Bezugszeichen Z2, Z4 zwei feste Widerstände bezeichnen. Die Widerstände Z1 bis Z4 sind mittels Leiterbahnen L12, L32, L43, L41 verbunden. Durch Anlegen einer Versorgungsspannung U0 ausgehend von Anschlusspads P1, P2 über Anschlussleitungen A12, A43 lässt sich aus den Widerständen Z1 bis Z4 eine Wheatstone-Brücke bilden, wobei ein Sensorsignal in Form einer Spannung US an den Anschlusspads P3, P4 abgreifbar ist, welche über Anschlussleitungen A41, A32 mit den Leiterbahnen L41 bzw. L32 verbunden sind.

Der Wert der Widerstände Z2, Z4 ist dabei vom Druck unabhängig, wohingegen der Wert der Widerstände Z1, Z3 vom Druck abhängig ist. In den Kavitäten unter der Membranwiderstände Z1, Z3 ist ein Druck pₖ eingeschlossen. Ist dieser Druck pₖ geringer als der zu messende Druck, so wird die jeweilige Membran durch den äußeren Druck in die Kavität gedrückt und berührt damit die Kontaktfläche der unteren Elektrode. Diese Kontaktfläche wird umso größer, je größer der äußere Druck ist. Der elektrische Widerstand zwischen den entsprechenden Elektroden verringert sich dementsprechend, wenn der äußere Druck steigt. Über die Wheatstone-Brücke wird diese Widerstandsänderung in das Sensorsignal in Form der Spannung US umgewandelt.

Die Schnittlinie X-X' dient später zur Erläuterung der Darstellung von Ausführungsformen der vorliegenden Erfindung, wo die entsprechenden Widerstände als R1 bis R4 bezeichnet werden.

### Offenbarung der Erfindung

Die Erfindung schafft eine mikromechanische Drucksensorvorrichtung nach Anspruch 1 und ein entsprechendes Herstellungsverfahren nach Anspruch 13.

Bevorzugte Weiterbildungen sind Gegenstand der jeweiligen Unteransprüche.

### Vorteile der Erfindung

Die der vorliegenden Erfindung zugrunde liegende Idee besteht in einem Zwei-Substrat-Ansatz für die Herstellung einer mikromechanischen Drucksensorvorrichtung. Dabei werden die Wafer bei der Herstellung in einem Waferbondverfahren miteinander verbunden. Auf der Vorderseite des zweiten Substrats wird der Membranwiderstandsbereich definiert und auf der Vorderseite des ersten Substrats wird die Gegenelektrode definiert, welche zusammen mit dem Membranwiderstandsbereich nach dem Bonden die Kavität bildet. Gegenelektrode und Membran bilden einen Bereich dessen Widerstand druckabhängig ist. Dieser Bereich soll im Folgenden Membranwiderstandsbereich bzw. membranartiger Widerstandsbereich genannt werden. Durch den Zwei-Substrat-Ansatz entfallen die Notwendigkeit einer Opferschicht zur Herstellung des Membranwiderstandsbereichs und die damit verbundenen technologischen Schwierigkeiten. Der Verschluss der Kaverne der Drucksensorvorrichtung erfolgt unmittelbar beim Bonden der beiden Substrate. Dabei ist das Einstellen eines quasibeliebigen aber definierten Drucks pₖ möglich. Bevorzugter Wert für p_{K} in der Anwendung als Absolutdrucksensor mit geringer Temperaturdrift ist ein Wert von 1 Pa. Im Gegensatz dazu ist bei der bekannten Drucksensorvorrichtung der Druck pₖ vorgegeben durch die Anforderung des Prozesses zum Verschließen der Kavität, der typischerweise bei 250 Pa liegt und dadurch eine erhöhte Temperaturdrift hervorruft. Neben dem geringeren Minimaldruck ist es durch die Erfindung ebenfalls möglich, andere definierte Drücke p_{K} einzustellen, z.B. Normaldruck von 101325 Pa bei 273,15K, was für einen barometrischen Drucksensor von Vorteil ist. Bei Bedarf ist es möglich, pK auf Werte zwischen ca. 1 Pa und 150000 Pa einzustellen.

Gemäß einer bevorzugten Weiterbildung weist das erste Substrat zwei Durchkontaktierungen zum elektrischen Kontaktieren der elektrischen Anschlüsse des ersten Widerstandsbereichs von der ersten Rückseite auf. So lässt sich eine stabile Kontaktierung schaffen.

Gemäß einer weiteren bevorzugten Weiterbildung ist eine zweite Elektrode auf der Vorderseite des ersten Substrats mit Abstand zur ersten Elektrode ausgebildet, wobei auf der Vorderseite des zweiten Substrats ein zweiter Widerstandsbereich mit Abstand zum ersten Widerstandsbereich ausgebildet ist und wobei die Vorderseite des ersten Substrats und die Vorderseite des zweiten Substrats derart über die Bondverbindung miteinander verbunden sind, dass sich der dabei gebildete zweite Widerstandsbereich druckunabhängig verhält. Dies ermöglicht die Bildung eines Referenzwiderstandes für eine Brückenschaltung.

Gemäß einer weiteren bevorzugten Weiterbildung weist das erste Substrat zwei weitere Durchkontaktierungen zum elektrischen Kontaktieren der elektrischen Anschlüsse des zweiten Widerstandbereichs von der ersten Rückseite auf. So lässt sich ebenfalls eine stabile Kontaktierung schaffen.

Gemäß einer weiteren bevorzugten Weiterbildung ist in dem zweiten Substrat eine Durchgangsöffnung ausgebildet, welche an der zweiten Vorderseite von dem ersten Widerstandsbereich überspannt ist. So ist der erste Widerstandsbereich von der zweiten Rückseite her zugänglich.

Gemäß einer weiteren bevorzugten Weiterbildung ist in dem zweiten Substrat eine weitere Durchgangsöffnung ausgebildet, welche an der zweiten Vorderseite von dem zweiten Widerstandsbereich überspannt ist. So ist der zweite Widerstandsbereich von der zweiten Rückseite her zugänglich.

Gemäß einer weiteren bevorzugten Weiterbildung ist der zweite Widerstandsbereich über Leiterbahnabschnitte, welche durch die zweite Durchgangsöffnung verlaufen, von der zweiten Rückseite elektrisch kontaktierbar. Dies ermöglicht eine einfache Verschaltung des zweiten Widerstandsbereichs.

Gemäß einer weiteren bevorzugten Weiterbildung weist das erste Substrat eine Druckzugangsöffnung auf, welche einen Druckzugang zur Kavität von der ersten Rückseite her bildet. So lässt sich ein Differenzdrucksensor realisieren.

Gemäß einer weiteren bevorzugten Weiterbildung ist auf der ersten Elektrode eine elektrisch leitfähige Zwischenschicht ausgebildet. Dies dient zweckmäßigerweise zum Einstellen eines gewünschten Arbeitswiderstands. Bevorzugter Wertebereich des Arbeitswidersandes ist der Bereich zwischen 500 Ohm und 500 kOhm.

Gemäß einer weiteren bevorzugten Weiterbildung ist auf der zweiten Elektrode eine elektrisch leitfähige Zwischenschicht ausgebildet. Dies dient ebenfalls zweckmäßigerweise zum Einstellen eines gewünschten Arbeitswiderstands. Bevorzugter Wertebereich des Arbeitswidersandes ist der Bereich zwischen 500 Ohm und 500 kOhm. Gemäß einer weiteren bevorzugten Weiterbildung umfasst die Bondverbindung mindestens eine Oxidschicht. So lässt sich eine stabile Bondverbindung herstellen.

Gemäß einer weiteren bevorzugten Weiterbildung umfassen das erste Substrat und/oder das zweite Substrat jeweils ein Wafersubstrat. So sind Standard-Halbleiterprozesse zur Strukturierung anwendbar.

Gemäß einer weiteren bevorzugten Weiterbildung ist der erste Widerstandsbereich über Leiterbahnabschnitte, welche durch die erste Durchgangsöffnung verlaufen, von der zweiten Rückseite elektrisch kontaktierbar. Dies ermöglicht eine Verschaltung des ersten Widerstandsbereichs.

### Kurze Beschreibung der Zeichnungen

Weitere Merkmale und Vorteile der vorliegenden Erfindung werden nachfolgend anhand von Ausführungsformen mit Bezug auf die Figuren erläutert.

Es zeigen:
- Fig. 1: eine schematische Querschnittsansicht zur Erläuterung einer mikromechanischen Drucksensorvorrichtung gemäß einer ersten Ausführungsform der vorliegenden Erfindung;
- Fig. 2a)-e): schematische Querschnittsansichten zur Erläuterung eines Herstellungsverfahrens eines ersten Substrats der mikromechanischen Drucksensorvorrichtung gemäß der ersten Ausführungsform der vorliegenden Erfindung;
- Fig. 3a)-e): schematische Querschnittsansichten zur Erläuterung eines Herstellungsverfahrens eines zweiten Substrats der mikromechanischen Drucksensorvorrichtung gemäß der ersten Ausführungsform der vorliegenden Erfindung;
- Fig. 4: eine schematische Querschnittsansicht zur Erläuterung einer mikromechanischen Drucksensorvorrichtung gemäß einer zweiten Ausführungsform der vorliegenden Erfindung;
- Fig. 5: eine schematische Querschnittsansicht zur Erläuterung einer mikromechanischen Drucksensorvorrichtung gemäß einer dritten Ausführungsform der vorliegenden Erfindung; und
- Fig. 6: eine schematische Schaltungsdarstellung zur Erläuterung des elektrischen Auswerteprinzips der aus der DE 10 2008 041 937 A1 bekannten mikromechanischen Drucksensorvorrichtung.

### Ausführungsformen der Erfindung

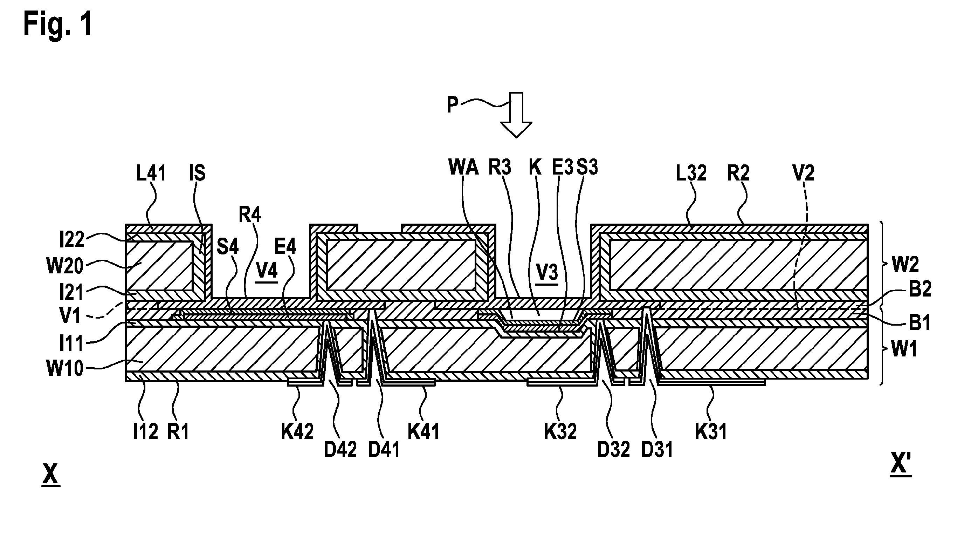

In den Figuren bezeichnen gleiche Bezugszeichen gleiche bzw. funktionsgleiche Elemente. Die Darstellung in Fig. 1, 4 und 5 entspricht dem Schnitt X-X' in Fig. 6.

Fig. 1 ist eine schematische Querschnittsansicht zur Erläuterung einer mikromechanischen Drucksensorvorrichtung gemäß einer ersten Ausführungsform der vorliegenden Erfindung.

In Fig. 1 bezeichnet Bezugszeichen W1 ein erstes Substrat mit einer ersten Vorderseite V1 und einer ersten Rückseite R1. Das erste Substrat W1 umfasst ein Wafersubstrat W10 aus Silizium, Glas, Keramik u.ä. An der Vorderseite V1 des ersten Substrats W1 ist eine erste Isolationsschicht I11 und an der Rückseite R1 eine zweite Isolationsschicht I12 vorgesehen.

Eine Wanne WA ist an der Vorderseite V1 des ersten Substrats W1 ausgebildet, wobei in der Wanne WA eine erste Elektrode E3 vorgesehen ist, welche sich über die Wanne WA hinaus in eine Peripherie der Wanne WA auf der ersten Vorderseite V1 erstreckt. Auf der ersten Elektrode E3 ist eine hochohmige elektrisch leitfähige Zwischenschicht S3 ausgebildet, welche zum Definieren eines Arbeitswiderstandes verwendet wird.

Auf der Vorderseite V1 ist eine zweite Elektrode E4 in Abstand zur ersten Elektrode E3 ausgebildet, auf der ebenfalls eine hochohmige Zwischenschicht S4 zum Definieren eines Arbeitswiderstandes gebildet ist.

In Fig. 1 bezeichnet Bezugszeichen W2 ein zweites Substrat mit einer zweiten Vorderseite V2 und einer zweiten Rückseite R2. Das zweite Substrat W2 weist ebenfalls ein Wafersubstrat W20 aus Silizium, Glas, Keramik o.ä. auf, wobei an der zweiten Vorderseite V2 eine dritte Isolationsschicht I21 und an der zweiten Rückseite R2 eine vierte Isolationsschicht I22 vorgesehen ist. Im Falle von Siliziumwafersubstraten W10, W20 sind die Isolationsschichten I11, I12, I21, I22 vorzugsweise aus Siliziumdioxid hergestellt.

In dem zweiten Substrat W2 ist eine erste Durchgangsöffnung V3 ausgebildet, die an der zweiten Vorderseite V2 von einem membranartigen ersten Widerstandsbereich R3 überspannt ist. Weiterhin weist das zweite Substrat W2 eine zweite Durchgangsöffnung V4 auf, welche an der zweiten Vorderseite von einem zweiten Widerstandsbereich R4 überspannt ist, welcher nicht membranartig ist, da er auf der Zwischenschicht S4 angebracht ist. Die Membrandicke der Widerstandsbereiche R3, R4 weisen typischerweise eine Dicke von 50 nm bis 5 mm auf.

Weiterhin weist das erste Substrat W1 an seiner Vorderseite V1 eine erste Bondschicht B1 auf, wohingegen das zweite Substrat W2 an der zweiten Vorderseite V2 eine zweite Bondschicht B2 aufweist. Die beiden Bondschichten B1 und B2 sind beim vorliegenden Ausführungsbeispiel aus einem Siliziumdioxid gebildet.

In einem Hochtemperaturschritt werden die beiden Substrate W1, W2 entlang der gestrichelten Linie in Fig. 1 derart aufeinander gebondet, dass der erste Widerstandsbereich R3 die erste Elektrode E3 zum Bilden einer Kavität K mit vorbestimmter Druckatmosphäre pₖ verschließt, wobei R3 die Elektrode E3 in der Peripherie der Wanne WA elektrisch kontaktiert. Ist der durch die Durchgangsöffnung V3 angelegte äußere Druck P größer als der Druck pₖ, verändert sich der Kontaktbereich des membranartigen ersten Widerstandsbereichs R3 mit der Zwischenschicht S3 und daher der resultierende Widerstand, was zur elektrischen Druckmessung ausgenutzt wird, wie eingangs erläutert.

Da der zweite Widerstandsbereich R4 die zweite Elektrode E4 über die Zwischenschicht S4 immer vollständig kontaktiert, ist der Kontaktbereich nicht vom angelegten externen Druck P abhängig ist.

Der erste Widerstandsbereich R3 ist über Leiterbahnabschnitte L32 mit dem Rest der Auswerteschaltung verbunden, also beispielsweise wie in Fig. 6 dargestellt, mit einem weiteren festen Widerstand R2. Der zweite Widerstandsbereich R4 ist über Leiterbahnabschnitte L41 mit dem Rest der Auswerteschaltung verbunden, also beispielsweise mit einem weiteren Widerstandsbereich R1, wie in Fig. 6 dargestellt. An den Seitenwänden der Durchgangsöffnungen V3, V4 ist ein Seitenwandoxid IS als Isolation vorgesehen.

Von der ersten Rückseite R1 ausgehend vorgesehen sind eine erste Durchkontaktierung K31 und eine zweite Durchkontaktierung K32, welche den ersten Widerstandsbereich R3 bzw. die erste Elektrode E3 kontaktieren. Diese Durchkontaktierungen K31, K32 verlaufen in entsprechenden Durchgangslöchern D31, D32 im ersten Substrat W1.

Weiterhin vorgesehen sind ausgehend von der ersten Rückseite R1 eine dritte Durchkontaktierung K41 und eine vierte Durchkontaktierung K42, welche den zweiten Widerstandsbereich R4 bzw. die zweite Elektrode E4 elektrisch kontaktieren. Die Durchkontaktierungen K41, K42 verlaufen in entsprechenden Durchgangslöchern D41, D42 im ersten Substrat W1.

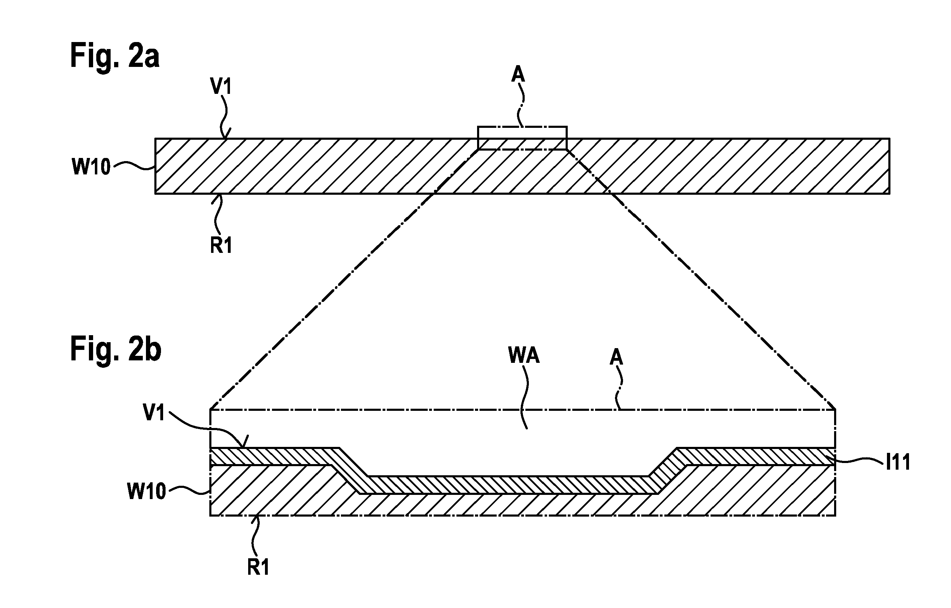

Fig. 2a)-e) zeigen schematische Querschnittsansichten zur Erläuterung eines Herstellungsverfahrens eines ersten Substrats der mikromechanischen Drucksensorvorrichtung gemäß der ersten Ausführungsform der vorliegenden Erfindung.

Gemäß Fig. 2a) wird zunächst das Wafersubstrat W10 bereitgestellt, welches im vorliegenden Fall ein Siliziumwafer ist. In Fig. 2a) bezeichnet Bezugszeichen A einen Ausschnitt, welcher in Fig. 2b) und 2c) vergrößert dargestellt ist.

Wie in Fig. 2b) dargestellt, wird eine Wanne WA auf der ersten Vorderseite V1 und darüber anschließend auf der Vorderseite V1, sowie auf der Rückseite R1 die erste und zweite Isolationsschicht I11, I12 aus Siliziumdioxid gebildet. Die Wanne WA lässt sich z.B. durch einen Trench-Ätzprozess oder auch durch einen LOCOS-Prozess herstellen.

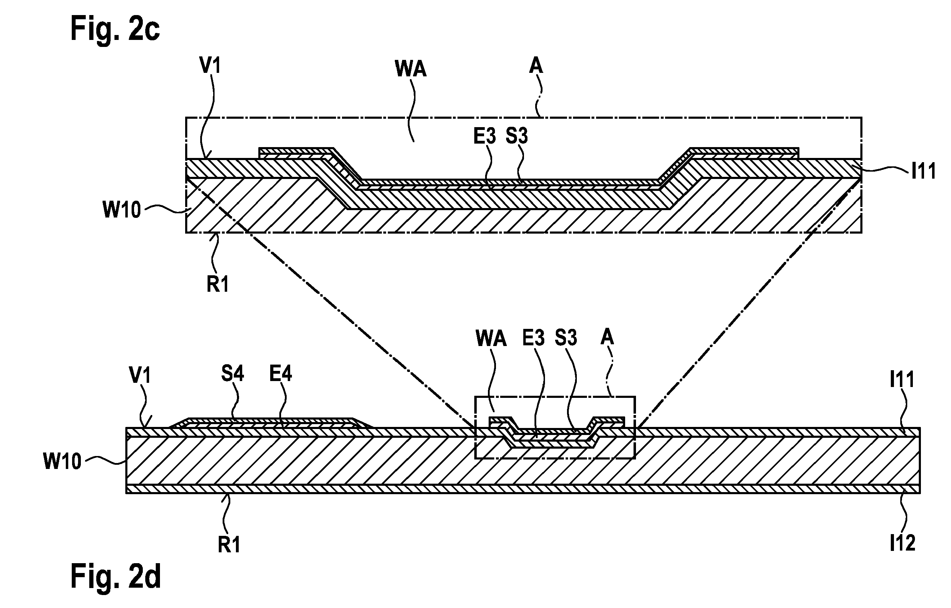

Im Anschluss daran werden gemäß Fig. 2c) die erste Elektrode E3 und die darauf befindliche hochohmige Zwischenschicht S3 in der Wanne WA und der umliegenden Peripherie gebildet. Die erste Elektrode E3 besteht beispielsweise aus dotiertem Poly-Siliziumcarbid oder einem anderen Halbleitermaterial mit ausreichender Leitfähigkeit. Die Zwischenschicht S3 besteht beispielsweise aus amorphen SiC.

Wie in Fig. 2d) gezeigt, werden simultan die zweite Elektrode E4 ebenfalls auf der ersten Isolationsschicht I11 strukturiert sowie die darüber liegende Zwischenschicht S4.

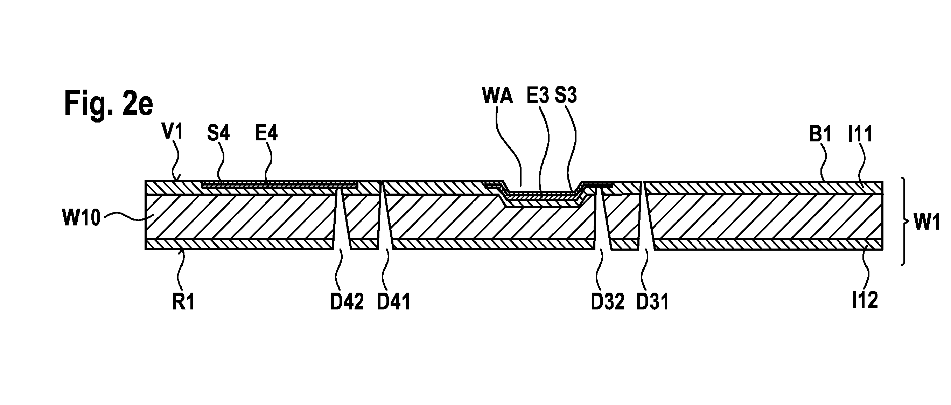

Danach wird, wie in Fig. 2e) dargestellt, die erste Bondschicht B1, die im Vorliegenden Fall beispielsweise aus CVD-Oxid besteht, an der Vorderseite V1 vorgesehen, wobei diese nicht über dem Bereich der ersten und zweiten Elektrode E3, E4 liegt. Das CVD-Oxid der ersten Bondschicht B1 kann durch einen CMP-Prozess auf die erforderliche Rauigkeit zum Bonden poliert werden.

Weiterhin veranschaulicht in Fig. 2e) ist das Anlegen der Durchgangslöcher D31, D32, D41, D42 für die Durchkontaktierungen K31, K32, K41, K42. Die Durchgangslöcher D31, D41 durchsetzen das gesamte erste Substrat W1 einschließlich der ersten Bondschicht B1.

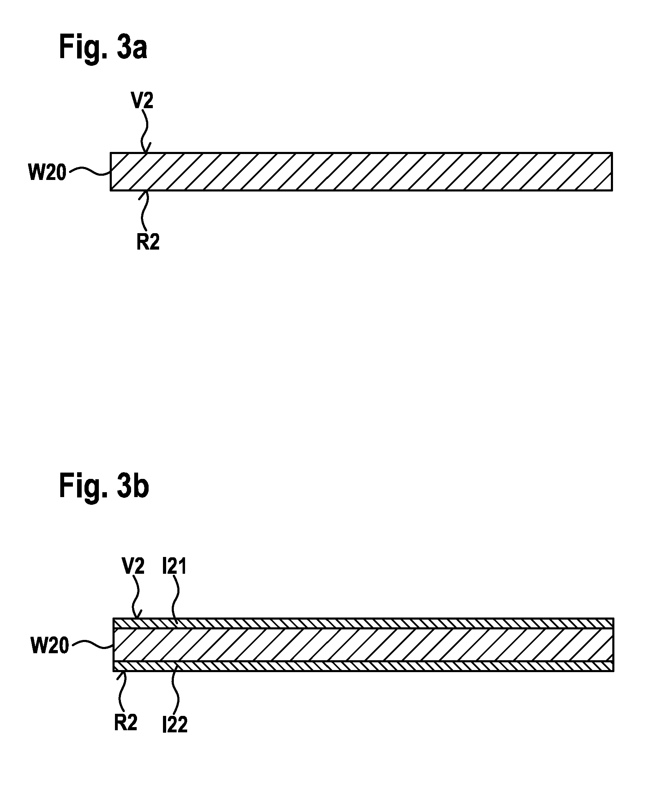

Fig. 3a)-e) zeigen schematische Querschnittsansichten zur Erläuterung eines Herstellungsverfahrens eines zweiten Substrats der mikromechanischen Drucksensorvorrichtung gemäß der ersten Ausführungsform der vorliegenden Erfindung.

Gemäß Fig. 3a) wird das zweite Wafersubstrat W20, ebenfalls ein Siliziumwafer, bereitgestellt. Im Anschluss daran werden die vorderseitige dritte Isolationsschicht I21 und die rückseitige vierte Isolationsschicht I22 gebildet, im vorliegenden Fall ebenfalls Siliziumdioxidschichten, wie in Fig. 3b) gezeigt.

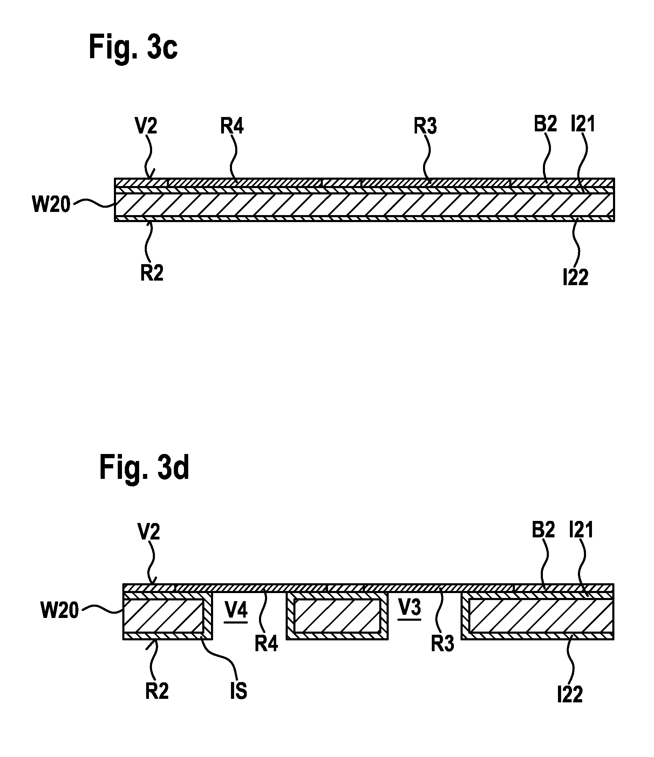

Weiter mit Bezug auf Fig. 3c) werden der erste Widerstandsbereich R3 und der zweite Widerstandsbereich R4 auf der zweiten Vorderseite abgeschieden und strukturiert. Dann wird die zweite Bondschicht B2 aus CVD-Oxid gebildet.

Im Anschluss daran erfolgt gemäß Fig. 3d) ein Trench-Ätzprozess von der zweiten Rückseite R2 aus, durch den die erste Durchgangsöffnung V3 und die zweite Durchgangsöffnung V4 gebildet werden. Zur besseren elektrischen Isolation wird an den Seitenwänden der Durchgangsöffnungen V3, V4 das Seitenwandoxid IS als Isolation vorgesehen. Der erste Widerstandsbereich R3 und der zweite Widerstandsbereich R4 überspannen somit die Durchgangsöffnungen V3 bzw. V4 an der zweiten Vorderseite V2.

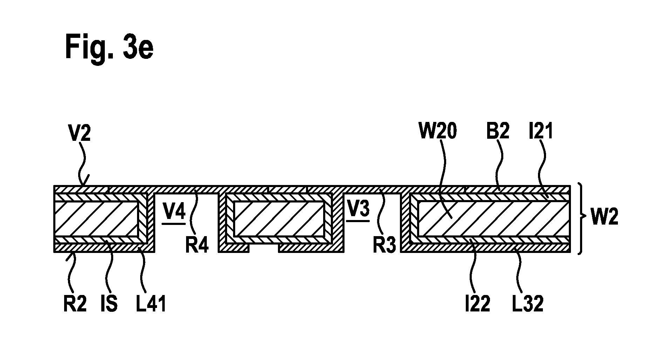

In einem weiteren Prozessschritt, der in Fig. 3e) gezeigt ist, erfolgt ein Abscheiden und Strukturieren der Leiterbahnabschnitte L32, L42.

Im Anschluss an die Prozesszustände gemäß Fig. 3e) bzw. 2e) werden die beiden Substrate W1, W2 in diesem Beispiel mit Bond-Schichten aus Siliziumoxid durch einen Hochtemperatur-Bondprozess dauerhaft und hermetisch miteinander verbunden, wobei die Kaverne K den vorbestimmten Druck pₖ einschließt.

Zuletzt werden durch Aufbringen und Strukturieren eines geeigneten Metalls, z.B. Au, W, Ti oder einer anderen Metallverbindung oder Legierung, die elektrischen Durchkontaktierungen K31, K32, K41, K42 auf der ersten Rückseite R1 realisiert.

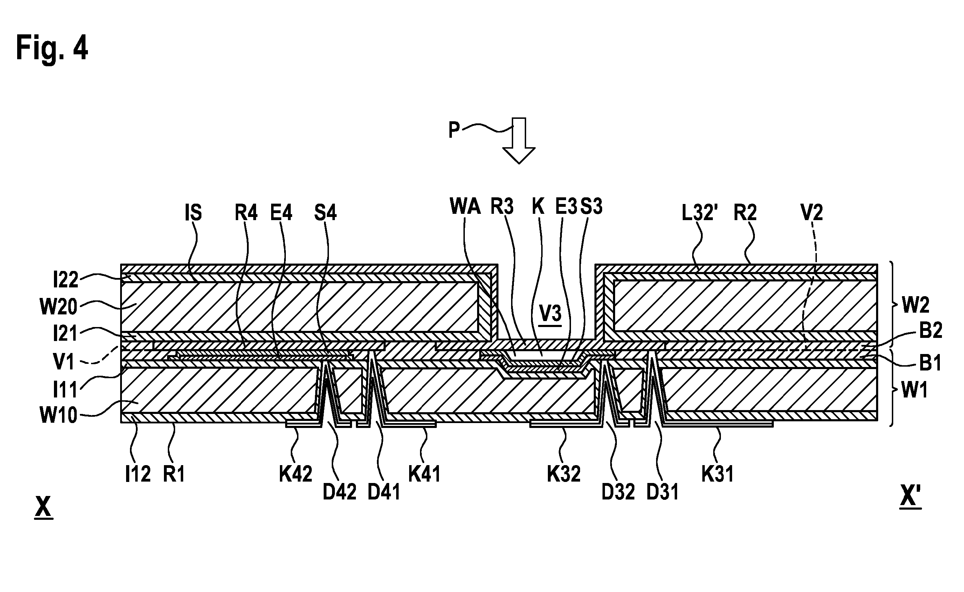

Fig. 4 ist eine schematische Querschnittsansicht zur Erläuterung einer mikromechanischen Drucksensorvorrichtung gemäß einer zweiten Ausführungsform der vorliegenden Erfindung.

Bei der zweiten Ausführungsform ist im zweiten Substrat W2 die zweite Durchgangsöffnung V4 nicht vorgesehen, und der zweite Widerstandsbereich R4 liegt auf der dritten Isolationsschicht I21 aus Siliziumdioxid.

Die Leiterbahnabschnitte zum Anschließen des zweiten Widerstandsbereichs R4 sind bei dieser Ausführungsform nicht dargestellt, sondern lediglich ein modifizierter Leiterbahnabschnitt L32' zum Anschließen des ersten Widerstandsbereichs R3.

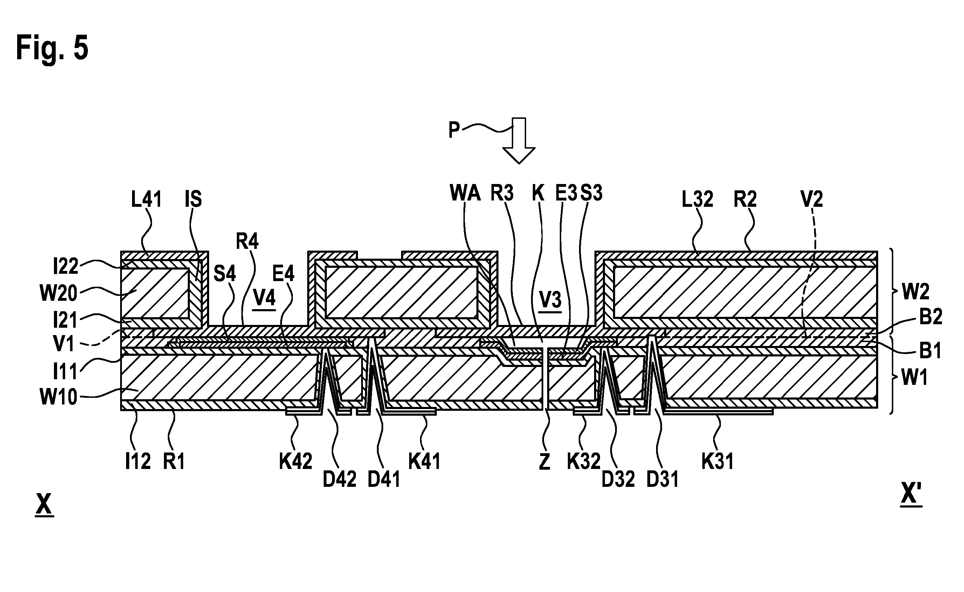

Fig. 5 ist eine schematische Querschnittsansicht zur Erläuterung einer mikromechanischen Drucksensorvorrichtung gemäß einer dritten Ausführungsform der vorliegenden Erfindung.

Bei der dritten Ausführungsform gemäß Fig. 5 ist im Unterschied zur ersten Ausführungsform gemäß Fig. 1 eine Druckzugangsöffnung Z im ersten Substrat W1 gebildet, welcher einen Druckzugang zur Kaverne K von der ersten Rückseite R1 her bildet.

Diese Ausführungsform kann als Differenzdrucksensor betrieben werden, da aufgrund der Druckzugangsöffnung Z ein Druckausgleich mit der Umgebung möglich ist. Gemessen wird in diesem Fall der Differenzdruck zwischen den Räumen auf der ersten und zweiten Rückseite R1, R2. Diese Bereiche müssen dann auf geeignete Weise voneinander isoliert werden.

Obwohl die vorliegende Erfindung anhand bevorzugter Ausführungsbeispiele beschrieben wurde, ist sie darauf nicht beschränkt. Insbesondere sind die genannten Materialien und Topologien nur beispielhaft und nicht auf die erläuterten Beispiele beschränkt.

Obwohl bei den obigen Ausführungsformen die Bondverbindung über ein Siliziumdioxid Interface hergestellt wird, ist sie nicht darauf beschränkt. Alternative Bondverfahren sowohl mit als auch ohne Haftvermittler schließt die Erfindung ein.

Obwohl bei den obigen Ausführungsformen der membranartige erste Widerstandsbereichaus einem leitfähigen Halbleitermaterial bzw. Metall bestand, kann dieser auch mit einem Isolator, z.B. Siliziumnitrid oder Mullit, hergestellt werden. In diesem Fall benötigt man eine weitere leitfähige Schicht auf dem Widerstandsbereich, um den Sensor elektrisch auswerten zu können. Diese kann sowohl aus einem Halbleitermaterial als auch aus einem metallischen Material bestehen.

Obwohl die Durchkontaktierungen bei den obigen Ausführungsformen nur dünnflächig dargestellt sind, können diese selbstverständlich auch die entsprechenden Durchgangslöcher vollständig füllen.

Obwohl die Leiterbahnen L12, L32, L43, L41 in den gezeigten Beispielen über die Rückseiten R1 und R2 geführt werden, können diese auch über die Vorderseiten V1 und V2 geführt werden.

## Patentansprüche

1. Mikromechanische Drucksensorvorrichtung mit:
einem ersten Substrat (W1) mit einer ersten Vorderseite (V1) und einer ersten Rückseite (R1);
einer in dem ersten Substrat (W1) ausgebildeten Wanne (WA), wobei in der Wanne (WA) eine erste Elektrode (E3) ausgebildet ist, welche sich über die Wanne (WA) hinaus in eine Peripherie der Wanne (WA) auf der erste Vorderseite (V1) erstreckt;
einem zweiten Substrat (W2) mit einer zweiten Vorderseite (V2) und einer zweiten Rückseite (R2);
einer in dem zweiten Substrat (W2) ausgebildeten ersten Durchgangsöffnung (V3), wobei die erste Durchgangsöffnung an der zweiten Vorderseite (V2) von einem membranartigen ersten Widerstandsbereich (R3) überspannt ist;
wobei die erste Vorderseite (V1) und die zweite Vorderseite (V2) derart über eine Bondverbindung (B1, B2) miteinander verbunden sind, dass der erste Widerstandsbereich (R3) die erste Elektrode (E3) zum Bilden einer Kaverne (K) mit vorbestimmter Druckatmosphäre verschließt und in der Peripherie der Wanne (WA) die erste Elektrode (E3) elektrisch kontaktiert; und
wobei der erste Widerstandsbereich (R3) durch Anlegen von Druck (P) durch die Durchgangsöffnung (V3) in die Wanne (WA) auslenkbar ist, so dass er die erste Elektrode (E3) innerhalb der Wanne (WA) elektrisch kontaktiert.

2. Mikromechanische Drucksensorvorrichtung nach Anspruch 1, wobei das erste Substrat (W1) eine erste Durchkontaktierung (K31) zum elektrischen Kontaktieren des ersten Widerstandsbereichs (R3) von der ersten Rückseite (R1) aus und eine zweite Durchkontaktierung (K32) zum elektrischen Kontaktieren der ersten Elektrode (E3) von der ersten Rückseite (R1) aus aufweist.

3. Mikromechanische Drucksensorvorrichtung nach Anspruch 1 oder 2, wobei eine zweite Elektrode (E4) auf der ersten Vorderseite (V1) in Abstand zur ersten Elektrode (E3) ausgebildet ist, wobei auf der zweiten Vorderseite (V2) ein zweiter Widerstandsbereich (R4) in Abstand zum ersten Widerstandsbereich (R3) ausgebildet ist und wobei die erste Vorderseite (V1) und die zweite Vorderseite (V2) derart über die Bondverbindung (B1, B2) miteinander verbunden sind, dass der zweite Widerstandsbereich (R4) die zweite Elektrode (E4) unabhängig vom angelegten Druck (P) elektrisch kontaktiert.

4. Mikromechanische Drucksensorvorrichtung nach Anspruch 3, wobei das erste Substrat (W1) eine dritte Durchkontaktierung (K41) zum elektrischen Kontaktieren des zweiten Widerstandsbereichs (R4) von der ersten Rückseite (R1) aus und eine vierte Durchkontaktierung (K42) zum elektrischen Kontaktieren der zweiten Elektrode (E4) von der ersten Rückseite (R1) aus aufweist.

5. Mikromechanische Drucksensorvorrichtung nach Anspruch 3 oder 4, wobei in dem zweiten Substrat (W2) eine zweite Durchgangsöffnung (V4) ausgebildet ist, welche an der zweiten Vorderseite (V2) von dem zweiten Widerstandsbereich (R4) überspannt ist.

6. Mikromechanische Drucksensorvorrichtung nach Anspruch 5, wobei der zweite Widerstandsbereich (R4) über Leiterbahnabschnitte (L42), welche durch die zweite Durchgangsöffnung (V4) verlaufen, von der zweiten Rückseite (R2) elektrisch kontaktierbar ist.

7. Mikromechanische Drucksensorvorrichtung nach einem der vorhergehenden Ansprüche, wobei das erste Substrat (W1) eine Druckzugangsöffnung (Z) aufweist, welche einen Druckzugang zur Kaverne (K) von der ersten Rückseite (R1) her bildet.

8. Mikromechanische Drucksensorvorrichtung nach einem der vorhergehenden Ansprüche, wobei auf der ersten Elektrode (E3) eine elektrisch leitfähige Zwischenschicht (S3) ausgebildet ist.

9. Mikromechanische Drucksensorvorrichtung nach Anspruch 3, wobei auf der zweiten Elektrode (E4) eine elektrisch leitfähige Zwischenschicht (S4) ausgebildet ist.

10. Mikromechanische Drucksensorvorrichtung nach einem der vorhergehenden Ansprüche, wobei die Bondverbindung (B1, B2) mindestens eine Oxidschicht umfasst.

11. Mikromechanische Drucksensorvorrichtung nach einem der vorhergehenden Ansprüche, wobei das erste Substrat (W1) und/oder das zweite Substrat (W2) jeweils ein Wafersubstrat (W10; W20) umfassen.

12. Mikromechanische Drucksensorvorrichtung nach einem der vorhergehenden Ansprüche, wobei der erste Widerstandsbereich (R3) über Leiterbahnabschnitte (L32), welche durch die erste Durchgangsöffnung (V3) verlaufen, von der zweiten Rückseite (R2) elektrisch kontaktierbar ist.

13. Herstellungsverfahren für eine mikromechanische Drucksensorvorrichtung mit den Schritten:
Bilden von einem ersten Substrat (W1) mit einer ersten Vorderseite (V1) und einer ersten Rückseite (R1), in dem eine Wanne (WA) ausgebildet ist, wobei in der Wanne (WA) eine erste Elektrode (E3) ausgebildet ist, welche sich über die Wanne (WA) hinaus in eine Peripherie der Wanne (WA) auf der erste Vorderseite (V1) erstreckt;
Bilden von einem zweiten Substrat (W2) mit einer zweiten Vorderseite (V2) und einer zweiten Rückseite (R2), in dem eine erste Durchgangsöffnung (V3) ausgebildet ist, wobei die erste Durchgangsöffnung an der zweiten Vorderseite (V2) von einem membranartigen ersten Widerstandsbereich (R3) überspannt ist;
Verbinden der ersten Vorderseite (V1) und der zweiten Vorderseite (V2) über eine Bondverbindung (B1, B2) derart miteinander, dass der erste Widerstandsbereich (R3) die erste Elektrode (E3) zum Bilden einer Kaverne (K) mit vorbestimmter Druckatmosphäre verschließt und in der Peripherie der Wanne (WA) die erste Elektrode (E3) elektrisch kontaktiert; und
wobei der erste Widerstandsbereich (R3) durch Anlegen von Druck (P) durch die Durchgangsöffnung (V3) in die Wanne (WA) auslenkbar ist, so dass er die erste Elektrode (E3) innerhalb der Wanne (WA) elektrisch kontaktiert.

14. Herstellungsverfahren nach Anspruch 13, wobei in dem ersten Substrat (W1) eine erste Durchkontaktierung (K31) zum elektrischen Kontaktieren des ersten Widerstandsbereichs (R3) von der ersten Rückseite (R1) aus und eine zweite Durchkontaktierung (K32) zum elektrischen Kontaktieren der ersten Elektrode (E3) von der ersten Rückseite (R1) aus gebildet werden.

15. Herstellungsverfahren nach Anspruch 13 oder 14, wobei zum Verbinden über die Bondverbindung (B1, B2) eine erste Oxidschicht (B1) auf der ersten Vorderseite (V1) und eine zweite Oxidschicht (B2) auf der zweiten Vorderseite (V2) gebildet wird, welche in einem Hochtemperaturschritt miteinander verbunden werden
